# EUROPEAN PATENT SPECIFICATION

(11) **EP 3 463 704 B1**
(45) Date of publication and mention of the grant of the patent: **13.03.2024**
(21) Application number: 17805933.3
(22) Date of filing: 29.05.2017
(51) Int. Cl.: B09B 3/00, B31D 1/00, B31D 5/00, B29C 70/34, B29B 17/00, C08J 11/06, B09B 5/00, B31B 50/59

(54) **METHOD AND APPARATUS FOR TREATING A STARTING MATERIAL, AND USE**
VERFAHREN UND VORRICHTUNG ZUR BEHANDLUNG EINES AUSGANGSMATERIALS UND VERWENDUNG
PROCÉDÉ ET APPAREIL POUR LE TRAITEMENT D'UNE MATIÈRE PREMIÈRE ET UTILISATION

(30) Priority: 30.05.2016 FI 20165448
(43) Date of publication of application: 10.04.2019
(73) Proprietor: Wimao Oy, 54190 Konnunsuo (FI)
(72) Inventor: VARIS, Juha, 53100 Lappeenranta (FI); KÄRKI, Timo, 55800 Imatra (FI)
(74) Representative: Papula Oy
(86) International application number: PCT/FI2017/050398
(87) International publication number: WO 2017/207869

(56) References cited:
- EP-A1- 1 803 694
- EP-A2- 0 759 323
- WO-A1-90/08020
- WO-A1-2013/117929
- WO-A1-2013/117929
- WO-A2-2012/175920
- GB-A- 2 309 699
- JP-A- H0 671 647
- JP-A- H0 671 647
- US-A- 3 671 615
- US-A1- 2014 316 036

## Description

### FIELD OF THE INVENTION

The invention relates to a method as defined in claim 1 and to an apparatus as defined in claim 7 for treating a starting material, and to the use of the method as defined in claim 12.

### BACKGROUND OF THE INVENTION

In the prior art, various ways are known to treat different types of starting materials, e.g. materials produced as waste, rejects or sidestreams and/or virgin materials. In addition, various ways are known for manufacturing different types of composite products. In general, composite products are manufactured by extrusion.

Document CN102757594 discloses a method where polypropylene being recycled is ground into fine particles and pelletized with an extruder. The polypropylene being recycled is blended with new polypropylene material and plant fibre material to form a starting material, and the starting material formed is heated and mechanically pressed into a product. Document EP 1803694 discloses a method for treating a starting material that may contain metal, plastic, stone chip or paper waste material. The starting material is ground, melted and extruded to form an intermediate product that is cut into small pellets. The pellets are melted and shaped into a product in a moulding stage. Document JP 2004148796 discloses a method where a fibre-reinforced object being recycled is crushed, the crushed material is sorted into a fragment, binder is arranged to the fragment, and the fragment is arranged into a plate-like aggregate that is pressed into a product. The material is heated prior to and during the pressing.

Document US3671615 discloses a method for making a composite board product from scrap material comprising plastic materials, fibrous materials and/or filler materials. WO 2013/117929 discloses a method to produce building blocks from cellulose fibre. JPH0671647 discloses a method for recycling waste, where shredded fibrous waste is mixed to form a mixture containing thermoplastics, which is supplied for compression molding. WO 2012/175920 discloses a method for making a solid material from waste citrus peel, where peel material is mixed with a mixing binder and the mixture is moulded to form a solid material. EP 0759323 discloses a two-stage agglomeration process where fibrous organic material is mixed with a powdered mineral, and a binding agent is added to the mixture, which is agglomerated.

### OBJECT OF THE INVENTION

The object of the invention is to disclose a method and apparatus for treating a starting material, e.g. waste material and/or virgin material, and for forming a product from the starting material. A further object of the invention is to disclose a new type of method and apparatus for forming a composite product. A further object of the invention is to disclose a method for treating waste material, reject material, sidestreams of a process, recycled material and reused material, especially for treating waste ending up at landfill sites, and for utilizing such waste as products. A further object of the invention is to disclose a method for reducing waste ending up at landfill sites. A further object of the invention is to disclose a method for reducing carbon dioxide emissions from waste ending up at landfill sites.

### SUMMARY OF THE INVENTION

The method and apparatus according to the invention are characterized by the features presented in the claims.

In the method according to the invention, a starting material, e.g. waste material and/or virgin material, is crushed and/or ground and the starting material that contains at least organic material is treated by mechanical pressing, whereby a product is provided. The starting material is mixed and agglomerated in a mixing stage to form a homogeneous and agglomerated mixture material, and preferably to raise the temperature. The mixture material is fed to a pressing stage in the form of granular agglomerates and is mechanically pressed in the pressing stage where the temperature of the mixture material rises due to the pressing, and a predetermined product is formed in the pressing stage by means of a press device which comprises a shape-giving tool for giving the shape of the product.

Further, the invention is based on an apparatus that comprises at least one mixing stage for forming a mixture material from a starting material that contains at least organic material, and at least one pressing stage for mechanically pressing the mixture material, where the temperature of the mixture material rises due to the pressing and where a predetermined product is formed.

In this connection, a starting material means any suitable starting material that contains at least organic material. The starting material may comprise waste material, recycled material, reused material and/or virgin material that contains organic material. The virgin material may comprise fresh organic material and/or fresh fibre-based material. Virgin material is intended to mean in this connection any virgin or fresh material, or a product formed from virgin material, or border, leftover or reject material produced in the manufacture of such product. The starting material may comprise one or more starting material components. In one case the starting material is a mixture that contains waste material and virgin material. In one embodiment the starting material comprises waste material. In one case the starting material mainly consists of waste material, such that the starting material contains more than 50 w-% waste material.

In this connection, waste material is intended to mean any waste material, e.g. landfill waste material, municipal waste, fractions separated from municipal waste, reject material from a process or manufacture, recyclable material from various sources, and sidestreams of industrial processes, wherein the waste material contains at least organic material. The waste material may also comprise recycled material and/or reused material. The waste material may comprise one or more than one waste material component. In general, waste material is non-homogeneous material. In one embodiment the waste material may comprise municipal waste, a fraction separated from municipal waste, construction waste, e.g. plasterboards and wood, demolition waste, industrial sidestreams, e.g. soft sidestreams of the extractive industry, textile waste, ash waste, plastic waste, paperboard waste, insulation material waste, fiberglass waste and/or suchlike components or their combinations.

In one case the starting material comprises more than 10 w-%, in one embodiment more than 20 w-%, and in one case more than 30 w-% organic material, e.g. organic fibre material. Organic material is intended to mean in this connection biodegradable material, biogenic material and/or material made from materials taken from nature, e.g. paper, cardboard, paperboard, pulp, plastic, wood or other biodegradable matter. Preferably, the organic material contains air-containing cellular cavities.

In one case the waste material that contains at least organic material is mixed in the mixing stage to form a mixture material, and preferably to raise the temperature. The mixture material is mechanically pressed in the pressing stage where the temperature of the mixture material rises due to the pressing, and a predetermined product is formed in the pressing stage.

In one case the virgin material that contains at least organic material is mixed in the mixing stage to form a mixture material, and preferably to raise the temperature. The mixture material is mechanically pressed in the pressing stage where the temperature of the mixture material rises due to the pressing, and a predetermined product is formed in the pressing stage.

In one case the waste material and the virgin material that contain at least organic material are mixed in the mixing stage to form a mixture material, and preferably to raise the temperature. The mixture material is mechanically pressed in the pressing stage where the temperature of the mixture material rises due to the pressing, and a predetermined product is formed in the pressing stage.

The starting material, e.g. waste material, is crushed and/or ground before the mixing stage. In one embodiment the apparatus comprises at least one crushing and/or grinding stage that comprises at least one crushing device and/or grinding device. In one embodiment the starting material or a fraction from it is ground into fibres before the mixing stage.

The agglomerated mixture material is formed. In one embodiment, agglomerates are formed. In one embodiment the starting material, e.g. waste material, is agglomerated in the mixing stage to form agglomerated mixture material. In one case the mixture material is agglomerated after the mixing device of the mixing stage. In one case the agglomeration takes place in connection with the mixing in the mixing stage.

Agglomeration is intended to mean in this connection granulation of the material, where the material is formed into grains, lumps or balls. The agglomeration is intended to mean any agglomeration, pelletizing, briquetting or suchlike granulation. Advantageously during agglomeration the temperature of the material rises under the effect of friction, whereby the agglomeration takes place in the presence of heat. An agglomerate is intended to mean in this connection any agglomerate, such as granular material, grains, lumps or balls.

In one case the mixture material formed may be in any suitable form, e.g. in the form of agglomerates or in the form of other suitable pieces, grains or particles. In one case the mixture material agglomerates, pieces, grains or particles may be in a substantially spherical form, in a substantially prismatic form, in a substantially cylindrical form, or in other suitable form or their combinations.

The mixing takes place in the presence of heat. In one embodiment the temperature of the starting material, e.g. waste material, is raised in the mixing stage. In one embodiment the temperature of the material being mixed rises under the effect of the mixing. In one embodiment the temperature of the material being mixed rises during the mixing under the effect of friction. In one case the temperature of the starting material is raised by means of heating. By means of heat the adhesion of the components of the starting material, e.g. waste material, is improved in connection with the mixing. Further, the heat facilitates e.g. the formation of the agglomerates.

The mixing stage comprises at least one mixing device for forming a mixture material. In one case the apparatus comprises at least one agglomeration device for agglomerating the starting material or the mixture material. In one case the apparatus comprises at least one pelletizing device. In one case the apparatus comprises at least one briquetting device. In one embodiment the mixing device is selected such that the starting material is mixed and agglomerated in the mixing device. In one case the mixing device is selected such that it is suited for mixing and agglomeration. In one embodiment the mixing device is an agglomeration device. The device may be any mixing device or agglomeration device known per se.

When the starting material is treated by mixing in the mixing stage, a more homogeneous and/or denser mixture material is provided. In one case, additives as desired, e.g. coupling agents or lubricating agents, may be added to the mixture material in the mixing stage. In one case, thermoplastics, e.g. recyclable plastic, recycled plastic, reused plastic and/or virgin plastic, are added to the mixture material in the mixing stage. In one case, thermosets are added, for example as a filler, to the mixture material in the mixing stage.

In one embodiment the mixture material is fed, e.g. in the form of agglomerates, from the mixing stage to an extrusion stage. One or more mixture materials may be fed to the extrusion stage. In one case the apparatus comprises at least one extrusion stage before the pressing stage, with at least one extrusion device, e.g. an extruder. In one case the extrusion stage may contain different stages and tools. In one case, , extrusion, formation of granules and/or pressing may be carried out in the extrusion stage. In one case the extrusion device is selected from a group consisting of a screw extruder, a 2-screw extruder, a piston extruder, other suitable extruder and their combinations. The extrusion device may be any known extrusion device or extruder.

In one case the apparatus comprises an extrusion stage that may be skipped during the process. In one case the mixture material is fed to the extrusion stage or conducted past the extrusion stage according to the process plan and/or depending on the starting material or the product being formed.

In one case, additives as desired and/or additional material are added to the mixture material in connection with the extrusion. In one case the mixture material is conducted in the form of an intermediate product from the extrusion stage to the pressing stage. In one case the intermediate product is a granule, a profiled intermediate product, a strip-type intermediate product, a film or their combination. In one case the intermediate product is in the form of granules.

The mixture material is fed to the pressing stage in a granular form, e.g. in the form of agglomerates or in the form of granules. In one case, at least part of the material being fed to the pressing stage is in the form of agglomerates or granules. Granular material settles well and evenly in the tool of the pressing stage and fills even a tool with different shapes.

In one case the mixture material is fed to the pressing stage in the form of suitable pieces, grains or particles. In one embodiment the mixture material pieces, grains or particles may be in a substantially spherical form, in a substantially prismatic form, in a substantially cylindrical form, or in other suitable form or their combinations.

In one case the mixture material is fed from the mixing stage to the pressing stage. In one embodiment the mixture material is fed from the extrusion stage to the pressing stage. In one case, one or more mixture materials may be fed to the pressing stage.

In one case preferably before starting the pressing, in addition to the mixture material also other material may be fed to the pressing stage, e.g. in the form of a film, in a strip-type form, in the form of a sheet or in the form of a profile, to form a combination product, e.g. to form a layered product. In one embodiment, reinforcing material or stiffener material may be fed to the pressing stage, in addition to the mixture material or into the mixture material, to form a combination product, e.g. a layered product. A combination product is intended to mean in this connection any combination product that comprises at least two different materials that may be mixed with each other and/or arranged in layers with each other and/or arranged in other suitable manner with each other. In one embodiment the combination product is a layered product. In one embodiment, film-type material, material having a technical property, or decorative material may be fed to the pressing stage in addition to the mixture material, such that the film-type material, material having a technical property or decorative material being fed can be arranged to the surface of the product being formed as a decorative component or a technical component. In one case, components having a technical property, e.g. bolts, screws, nuts or magnets used for fastening, or pipe, stiffening bar or other functionality adding material may be fed to the pressing stage in addition to the mixture material, such that the product being formed is provided with a functional part, e.g. for fastening or stiffening, or for conveying a medium in a pipe present in connection with the product. In one case, filler material that may be material lighter than the mixture material may be fed to the pressing stage, in addition to the mixture material or into the mixture material, to form a combination product, whereby the volume of the product may be filled, the weight of the product reduced, or the need of the starting material decreased. In one case, in the pressing stage an empty space is arranged from the mixture material inside the product being formed, e.g. by gas blowing, by foaming, by the balloon technique or in other suitable manner.

The pressing stage comprises at least one press device for mechanically pressing the mixture material. In one embodiment the press device is selected from a group consisting of a hydraulic press device, a pneumatic press device, an electrical press device, an electromechanical press device, a mechanical press device or their combinations. In one case the press device is a counter extrusion device where the material is pressed and fills the space arranged between the tools of the press device, or a movable press device or a rotary press device, or other suitable press device. In one case the press device comprises a tool arrangement for giving the shape of the product. In one case the tool arrangement comprises hydraulic or pneumatic power transmission. In one case the press device comprises a shape-giving tool for giving the shape of the product, which tool may be a single- or a multi-part tool. In one case the shape-giving tool comprises a shape-giving part, such as a mould, and a piston or a corresponding power-transmitting mechanism for pressing the material against the shape-giving part, and a power and movement generating part, such as an actuator e.g. a hydraulic, pneumatic or electrical cylinder, for moving the piston or the corresponding power-transmitting mechanism. In one case the press device comprises at least one additional part, e.g. a movable or stationary core or the like or other suitable additional part that is arranged in connection with the shape-giving tool, to give shape or additional shape to the product or part of it. In one case a multi-part shape-giving tool, where the purpose of the parts is separately or collectively to shape the product or facilitate the removal of the product from the tool. The press device may be any press device known per se.

In one case, sufficient pressure to bring the product to a desired shape is arranged to the pressing stage and to the press device.

In one case the mixture material is heated before the pressing stage, preferably below the melting temperature so that the particles, such as agglomerates or granules, of the mixture material will not adhere to each other and form a large cluster of mass, e.g. an aggregate. In one case the mixture material is heated before the pressing stage to a temperature that is at least the melting temperature of the mixture material or any of its components. In one embodiment the mixture material is heated before the pressing stage to a temperature of 80 - 250 °C, in one embodiment 170 - 220 °C, and in one case 140 - 170 °C, depending on the starting material and the additives. In one case the mixture material is heated before the pressing stage to a temperature that is below the melting temperature of the material. In one embodiment the mixture material is heated in connection with the extrusion stage. In one case the mixture material is heated in connection with the pressing stage.

In one case the method comprises a heating stage before the pressing stage. In one embodiment the mixture material is heated after the mixing stage in the heating stage before the pressing stage. In one embodiment the heating stage comprises at least one heating device. The heating device may be any heating device known per se.

In one case the mixture material is cooled before the pressing stage, e.g. after the extrusion stage.

In one case the mixture material is fed to the pressing stage without separate heating or cooling.

In one case the temperature at the start of the pressing stage is below the melting temperature of the mixture material, so that the particles of the mixture material, e.g. agglomerates or granules, will not adhere to each other.

In one case the temperature at the start of the pressing stage is at least the melting temperature of the mixture material or any of its components.

In the pressing stage the temperature of the mixture material rises due to the pressing, due to compression of the mixture material, and/or by means of an external heat source, e.g. a heater device or a heated press device. The rise of the temperature of the mixture material due to the pressing and the amount of the rise of the temperature depends on the mixture material. Preferably the giving of the shape of the product takes place in the pressing stage in the presence of heat. In one case a gas present in the mixture material, e.g. gas in the cellular cavities of the organic material and/or gas between the particles of the mixture material, is compressed and its pressure rises, providing the rise of the temperature of the mixture material in the pressing stage. In one case the friction increases during the pressing, which raises the temperature of the mixture material. In one embodiment the pressing is carried out such that the pressure increases and the temperature increases in the cells of the organic material of the mixture material, such as the cells of organic fibre, whereby the components of the material, e.g. fibres, adhere to each other. In one case the mixture material at least partly melts in the pressing stage under the effect of heat and forms into a product.

In one case, in connection with the press device there is a heater device and/or a cooling device for heating and/or cooling the shape-giving tool of the press device. In one case the shape-giving tool is heated before the pressing. In one case the shape-giving tool is not heated before the pressing, whereby a so-called cold tool is used. In one case, at least one part of the shape-giving tool is heated and at least one part is not heated before the pressing. In one case the shape-giving tool may be arranged to a temperature where the mixture material does not adhere to it in the mixture material feeding stage. In one case an additive may be added to the mixture material to prevent the adhesion of the mixture material to the shape-giving tool. In one case a substance or material may be arranged to the surface of the shape-giving tool or between the shape-giving tool and the mixture material to prevent the adhesion of the mixture material to the shape-giving tool. In one case the shape-giving tool is provided with such a structure that it is compressible after the pressing stage, whereby the product is easily removable from the shape-giving tool.

In one case a heater device is provided in connection with the press device for heating the mixture material in the pressing stage. In one case the mixture material is heated in connection with the pressing stage.

In one case the apparatus comprises at least one temperature adjusting device for measuring and adjusting temperature. In one case the temperature adjusting device is arranged in the mixing stage. In one embodiment the temperature adjusting device is arranged in the pressing stage. In one embodiment the temperature adjusting device is arranged in the extrusion stage. In one case the temperature adjusting device is arranged in the heating stage.

In one case the apparatus comprises at least one temperature determining device for measuring temperature. In one case the temperature determining device is arranged in the mixing stage. In one embodiment the temperature determining device is arranged in the pressing stage. In one case the temperature determining device is arranged in the extrusion stage. In one case the temperature determining device is arranged in the heating stage.

In one case the apparatus comprises a pressure adjusting system for monitoring and adjusting the pressure of the pressing stage and the associated press device. In one case the apparatus comprises a force adjusting system for monitoring and adjusting the force of the pressing stage. In one case the pressing is arranged to a predetermined pressure level in the pressing stage. In one case the pressing in the pressing stage is arranged to a pressure level which provides a sufficient temperature. In one embodiment, in the pressing stage the temperature is raised to a level where at least part of the mixture material melts. In one case the pressure adjusting system maintains the pressure level at a desired level during the pressing.

In one case the process according to the method is operated continuously. In one case the apparatus is arranged to operate continuously. In one embodiment, agglomerates are formed, which may be stored temporarily and/or transported as feed material to a separate extrusion stage and/or pressing stage.

The method and apparatus according to the invention may be used in applications selected from the group of: treatment of a starting material into reused products or recycled products, manufacture of composite products, manufacture of combination products, manufacture of layered products, manufacture of an asphalt raw material component, manufacture of a concrete composition component, treatment of industrial sidestreams, manufacture of products from waste material, reduction of the amount of waste material and their combinations.

Due to the invention, various starting materials may be utilized in the manufacture of a variety of products with many sizes, such as composite products. Further due to the invention, raw materials of a low degree of processing as well as waste, reject and leftover materials may be easily treated and formed into useful products. By means of the invention the amount of waste ending up at landfill sites may be reduced, and carbon dioxide emissions may be reduced.

The devices needed in the method and apparatus according to the invention are simple. Especially the devices needed in the pressing stage are simple and inexpensive, so production of the products is also easy to be decentralized. Furthermore, pressing as a process is simple. It is easy to manufacture, treat, store and transport the agglomerates, and they may be manufactured as intermediate products.

The method according to the invention does not produce additional waste nor emissions.

Further, by the method and apparatus according to the invention, various composite products may be produced economically and safely. The method and apparatus may be flexibly used in the manufacture of large and small batches. Also the maintenance and servicing costs are low.

### LIST OF FIGURES

Fig. 1 represents one apparatus according to the invention, and
Fig. 2 represents another apparatus according to the invention.

### DETAILED DESCRIPTION OF THE INVENTION

The invention will be described below by way of detailed examples of its embodiments with reference to the accompanying figures.

### Example 1

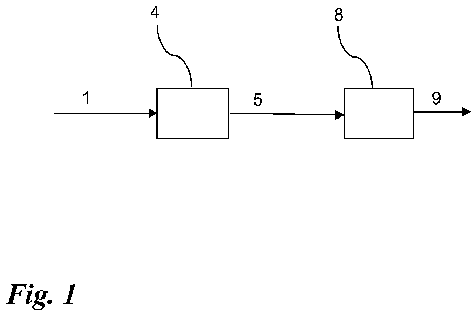

Fig. 1 represents an apparatus that comprises a mixing stage (4) for forming a mixture material (5) from a starting material (1) that contains at least organic material, and a pressing stage (8) for mechanically pressing the mixture material into a product (9) by means of heat.

The mixing stage (4) comprises a mixing device for forming the mixture material (5). The mixing stage may also comprise an agglomeration device for forming agglomerates. Alternatively the mixing device is selected such that the starting material is mixed and agglomerated in the mixing device. The mixing device may be an agglomeration device known per se, where both mixing and agglomeration takes place. In the agglomeration device the temperature of the material rises under the effect of friction in connection with the mixing. Preferably the mixing takes place in the presence of heat.

The pressing stage (8) comprises a press device, such as a tool comprising a shape-giving part, such as a mould, and a piston for moving the material and pressing it against the shape-giving part, and an actuator e.g. a hydraulic, pneumatic or electrical cylinder, for moving the piston and providing the pressing. The press device may be a counter extrusion device. Alternatively the press device may be a movable press, a rotary press or other known press device. The apparatus comprises a pressure adjusting system for monitoring and adjusting the pressure of the press device.

In one embodiment the starting material (1) that contains at least organic material is mixed in the mixing stage (4) to form the mixture material (5). The starting material (1) preferably contains waste material. The mixture material (5) is in the form of agglomerates after the mixing stage. The mixture material agglomerates are conducted or placed to the tool of the press device of the pressing stage (8), where the agglomerates are mechanically pressed. The actuator of the tool moves the piston against the mould, such that the pressure of air in the mixture material starts to increase while the volume decreases, which results in the rise of the temperature of the compressing air. The temperature of the mixture material rises due to the pressing, and the product (9) is formed in the presence of heat. Advantageously the pressure of air inside the cellular cavities of the organic material rises due to the pressing, such that the temperature rises and the components, such as fibres, of the mixture material adhere to each other so as to form a desired product.

### Example 2

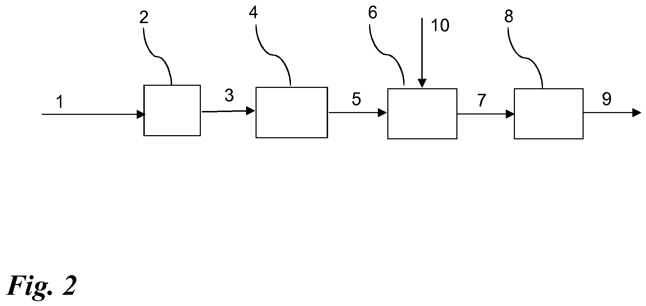

Fig. 2 represents an apparatus comprising a starting material (1) crushing/grinding stage (2), a mixing stage (4) for forming a mixture material (5) from the starting material that contains at least organic material, an extrusion stage (6), and a pressing stage (8) for mechanically pressing the mixture material into a product (9) by means of heat.

The apparatus comprises at least one crushing and/or grinding stage (2) for crushing the starting material.

The mixing stage (4) comprises a mixing device for forming the mixture material (5). Preferably the mixing device is an agglomeration device known per se, where both mixing and agglomeration takes place. In the agglomeration device the temperature of the material rises under the effect of friction in connection with the mixing. Preferably the mixing takes place in the presence of heat.

The extrusion stage (6) comprises an extrusion device, such as an extruder that is disposed before the pressing stage (8). In the extrusion stage the mixture material (5) is formed into an extrusion intermediate product, such as granules (7) that are conducted to the pressing stage (8).

The pressing stage (8) comprises a press device, such as a tool comprising a shape-giving part, such as a mould, and a piston for moving the material and pressing it against the shape-giving part, and an actuator e.g. a hydraulic, pneumatic or electrical cylinder, for moving the piston and providing the pressing. The press device may be a counter extrusion device. Alternatively the press device may be a movable press, a rotary press or other known press device. The apparatus comprises a pressure adjusting system for monitoring and adjusting the pressure of the press device.

In one embodiment the starting material (1) that contains at least organic material is crushed in the crushing and/or grinding stage (2). The starting material (1) preferably contains waste material. Crushed starting material (3) is mixed in the mixing stage (4) to form the mixture material (5). To the mixture material, additives as desired may be added in the mixing stage. The mixture material is in the form of agglomerates after the mixing stage. The mixture material (5) is fed in the form of agglomerates from the mixing stage (4) to the extrusion stage (6), where the mixture material is formed into the intermediate product (7) that may be in the form of granules. In the extrusion stage, additional material as desired or additives (10) may be added to the mixture material. The mixture material in the form of granules(7) is conducted or placed to the tool of the press device of the pressing stage (8), where the agglomerates are mechanically pressed. The actuator of the tool moves the piston against the mould, such that the pressure of air in the mixture material starts to increase while the volume decreases, which results in the rise of the temperature of the compressing air. The temperature of the mixture material rises due to the pressing, and the product (9) is formed in the presence of heat. Advantageously the pressure of air inside the cellular cavities of the organic material rises due to the pressing, such that the temperature rises and the components, such as fibres, of the mixture material adhere to each other so as to form a desired product.

### Example 3

In this example the product (9) is formed from the starting material (1) by the apparatus according to Fig. 2 and Example 2, where the extrusion stage (6) is replaced with a mixture material (5) heating stage.

### Example 4

In this example the product (9) is formed from the starting material (1) by the apparatus according to Fig. 2 and Example 2, where the extrusion stage (6) is replaced with a mixture material (5) heating stage and where the press device used is a mechanical press device that is provided with additional heating to facilitate the pressing.

### Example 5

In this example the product (9) is formed from the starting material (1) by the apparatus according to Fig. 1 and Example 1 or Fig. 2 and Example 2, where there is no extrusion stage (6) and where in the pressing stage, also other material is used in addition to the mixture material to form the product.

The method and apparatus according to the invention are suited as different embodiments for use in a variety of applications to treat a variety of starting materials. Further, the method and apparatus according to the invention are suited as different embodiments for use in the manufacture of a variety of composite products. Further, the method and apparatus according to the invention are suited as different embodiments for use to treat a variety of waste materials.

The invention is not limited merely to the above examples, but many variations are possible within the scope of the claims.

## Claims

1. A method for treating a starting material, **characterized in that**
- a starting material (1) is crushed and/or ground (2),
- the starting material (1) that contains at least organic material is mixed and agglomerated in a mixing stage (4) in the presence of heat to form homogeneous and agglomerated mixture material (5) such that the temperature of the material rises under the effect of friction during the agglomeration,
- the mixture material (5) is fed to a pressing stage in the form of granular agglomerates, and
- the mixture material (5) is mechanically pressed in the pressing stage (8), where the temperature of the mixture material rises due to the pressing, and a predetermined product (9) is formed in the pressing stage by means of a press device which comprises a shape-giving tool for giving the shape of the product.

2. The method according to claim 1, **characterized in that** the starting material (1) comprises waste material, recycled material, reused material, and/or virgin material.

3. The method according to claim 2, **characterized in that** the waste material comprises municipal waste, a fraction separated from municipal waste, construction waste, demolition waste, industrial sidestreams, textile waste, ash waste, plastic waste, paperboard waste, insulation material waste, fiberglass waste, or their combinations.

4. The method according to any one of claims 1 - 3, **characterized in that** the mixture material (5) is fed from the mixing stage (4) to an extrusion stage (6) before the pressing stage (8).

5. The method according to any one of claims 1 - 4, ch a r a cter i zed in that also other material is fed to the pressing stage (8) in addition to the mixture material (8) to form a combination product.

6. The method according to any one of claims 1 - 5, **characterized in that** the mixture material (5) is heated in a heating stage before the pressing stage (8).

7. An apparatus for treating a starting material, **characterized in that** the apparatus comprises
- at least one mixing stage (4) comprising at least one mixing device selected such that a starting material (1) is mixed and agglomerated in the mixing device to form homogeneous and agglomerated mixture material (5) from the starting material (1), which contains at least organic material and which has been crushed and/or ground (2), such that the temperature of the material rises under the effect of friction during the agglomeration,
- at least one pressing stage (8), which comprises at least one press device comprising a shape-giving tool for giving the shape of the product, for mechanically pressing the mixture material (5), where the mixture material is fed in the form of granular agglomerates and where the temperature of the mixture material rises due to the pressing and where a predetermined product (9) is formed by means of the shape-giving tool.

8. The apparatus according to claim 7, **characterized in that** the apparatus comprises at least one crushing and/or grinding stage (2).

9. The apparatus according to claim 7 or 8, **characterized in that** the apparatus comprises at least one extrusion stage (6) before the pressing stage (8).

10. The apparatus according to any one of claims 7 - 9, **characterized in that** the press device comprises a shape-giving part and a piston for pressing the material against the shape-giving part, and a part generating power and movement for moving the piston.

11. The apparatus according to any one of claims 7 - 10, **characterized in that** the apparatus comprises a pressure adjusting system for monitoring and adjusting the pressure of the pressing stage (8) .

12. Use of the method according to any one of claims 1 - 6, **characterized in that** the method is used in applications selected from a group comprising treatment of a starting material into reused products or recycled products, manufacture of composite products, manufacture of combination products, manufacture of layered products, manufacture of an asphalt raw material component, manufacture of a concrete composition component, treatment of industrial sidestreams, manufacture of products from waste material and/or reduction of the amount of waste material and their combinations.

## Patentansprüche

1. Verfahren zum Behandeln eines Ausgangsmaterials, **dadurch gekennzeichnet, dass**
- ein Ausgangsmaterial (1) zerkleinert und/oder gemahlen wird (2),
- das Ausgangsmaterial (1), das zumindest organisches Material enthält, in einer Mischstufe (4) in Gegenwart von Hitze gemischt und agglomeriert wird, um ein homogenes und agglomeriertes Mischungsmaterial (5) derart zu bilden, dass die Temperatur des Materials unter der Wirkung von Reibung während der Agglomeration ansteigt,
- das Mischungsmaterial (5) in Gestalt von körnigen Agglomeraten einer Pressstufe zugeführt wird, und
- das Mischungsmaterial (5) in der Pressstufe (8) mechanisch gepresst wird, wobei die Temperatur des Mischungsmaterials durch das Pressen ansteigt, und ein vorbestimmtes Produkt (9) in der Pressstufe mittels eines Pressgeräts gebildet wird, das ein formgebendes Werkzeug umfasst, um dem Produkt die Form zu geben.

2. Verfahren gemäß Anspruch 1, **dadurch gekennzeichnet, dass** das Ausgangsmaterial (1) Abfallmaterial, wiederverwertetes Material, wiederverwendetes Material und/oder neues Material umfasst.

3. Verfahren gemäß Anspruch 2, **dadurch gekennzeichnet, dass** das Abfallmaterial Siedlungsabfälle, eine von Siedlungsabfällen getrennte Fraktion, Bauabfälle, Abbruchabfälle, industrielle Nebenströme, Textilabfälle, Ascheabfälle, Kunststoffabfälle, Pappabfälle, Isoliermaterialabfälle, Glasfaserabfälle oder deren Kombinationen umfasst.

4. Verfahren gemäß einem der Ansprüche 1 - 3, **dadurch gekennzeichnet, dass** das Mischungsmaterial (5) von der Mischstufe (4) einer Extrusionsstufe (6) vor der Pressstufe (8) zugeführt wird.

5. Verfahren gemäß einem der Ansprüche 1 - 4, **dadurch gekennzeichnet, dass** der Pressstufe (8) zusätzlich zu dem Mischungsmaterial (8) auch anderes Material zugeführt wird, um ein Kombinationsprodukt zu bilden.

6. Verfahren gemäß einem der Ansprüche 1 - 5, **dadurch gekennzeichnet, dass** das Mischungsmaterial (5) in einer Heizstufe vor der Pressstufe (8) erhitzt wird.

7. Vorrichtung zum Behandeln eines Ausgangsmaterials, **dadurch gekennzeichnet, dass** die Vorrichtung Folgendes umfasst
- zumindest eine Mischstufe (4), die zumindest ein Mischgerät umfasst, das derart ausgewählt ist, dass ein Ausgangsmaterial (1) in dem Mischgerät gemischt und agglomeriert wird, um homogenes und agglomeriertes Mischungsmaterial (5) aus dem Ausgangsmaterial (1) zu bilden, das zumindest organisches Material enthält und das zerkleinert und/oder gemahlen wurde (2), derart, dass die Temperatur des Materials unter der Wirkung von Reibung während der Agglomeration ansteigt,
- zumindest eine Pressstufe (8), die zumindest ein Pressgerät umfasst, das ein formgebendes Werkzeug umfasst, um dem Produkt die Form zu geben, um das Mischungsmaterial (5) mechanisch zu pressen, wobei das Mischungsmaterial in Gestalt von körnigen Agglomeraten zugeführt wird und wobei die Temperatur des Mischungsmaterials durch das Pressen ansteigt und wobei ein vorbestimmtes Produkt (9) mittels des formgebenden Werkzeugs gebildet wird.

8. Vorrichtung gemäß Anspruch 7, **dadurch gekennzeichnet, dass** die Vorrichtung zumindest eine Zerkleinerungs- und/oder Mahlstufe (2) umfasst.

9. Vorrichtung gemäß Anspruch 7 oder 8, **dadurch gekennzeichnet, dass** die Vorrichtung zumindest eine Extrusionsstufe (6) vor der Pressstufe (8) umfasst.

10. Vorrichtung gemäß einem der Ansprüche 7 - 9, **dadurch gekennzeichnet, dass** das Pressgerät einen formgebenden Teil und einen Kolben zum Pressen des Materials gegen den formgebenden Teil umfasst, und einen Teil, der Leistung und Bewegung zum Bewegen des Kolbens erzeugt.

11. Vorrichtung gemäß einem der Ansprüche 7 - 10, **dadurch gekennzeichnet, dass** die Vorrichtung ein Druckeinstellsystem zum Überwachen und Einstellen des Drucks der Pressstufe (8) umfasst.

12. Verwendung des Verfahrens gemäß einem der Ansprüche 1 - 6, **dadurch gekennzeichnet, dass** das Verfahren in Anwendungen verwendet wird, die aus einer Gruppe ausgewählt sind, die Behandlung eines Ausgangsmaterials zu wiederverwendeten Produkten oder wiederverwerteten Produkten, Herstellung von Verbundprodukten, Herstellung von Kombinationsprodukten, Herstellung von Schichtprodukten, Herstellung einer Asphaltrohmaterialkomponente, Herstellung einer Betonzusammensetzungskomponente, Behandlung von industriellen Nebenströmen, Herstellung von Produkten aus Abfallmaterial und/oder Verringerung der Menge von Abfallmaterial und deren Kombinationen umfasst.

## Revendications

1. Procédé pour traiter une matière de départ, **caractérisé en ce que**
- une matière de départ (1) est écrasée et/ou broyée (2),
- la matière de départ (1) qui contient au moins une matière organique est mélangée et agglomérée dans un étage de mélange (4) en présence de chaleur pour former une matière de mélange (5) homogène et agglomérée de telle sorte que la température de la matière augmente sous l'effet d'un frottement durant l'agglomération,
- la matière de mélange (5) est acheminée vers un étage de pressage sous la forme d'agglomérats granulaires, et
- la matière de mélange (5) est pressée mécaniquement dans l'étage de pressage (8), où la température de la matière de mélange augmente en raison du pressage, et un produit prédéterminé (9) est formé dans l'étage de pressage au moyen d'un dispositif de presse qui comprend un outil de mise en forme pour mettre en forme le produit.

2. Procédé selon la revendication 1, **caractérisé en ce que** la matière de départ (1) comprend des déchets, une matière recyclée, une matière réutilisée, et/ou une matière vierge.

3. Procédé selon la revendication 2, **caractérisé en ce que** les déchets comprennent des déchets municipaux, une fraction séparée de déchets municipaux, des déchets de construction, des déchets de démolition, des flux secondaires industriels, des déchets textiles, des déchets sous forme de cendres, des déchets plastiques, des déchets de carton, des déchets de matière isolante, des déchets de fibre de verre, ou leurs combinaisons.

4. Procédé selon l'une quelconque des revendications 1 à 3, **caractérisé en ce que** la matière de mélange (5) est acheminée à partir de l'étage de mélange (4) jusqu'à un étage d'extrusion (6) avant l'étage de pressage (8).

5. Procédé selon l'une quelconque des revendications 1 à 4, **caractérisé en ce qu'**également une autre matière est acheminée vers l'étage de pressage (8) en plus de la matière de mélange (8) pour former un produit de combinaison.

6. Procédé selon l'une quelconque des revendications 1 à 5, **caractérisé en ce que** la matière de mélange (5) est chauffée dans un étage de chauffage avant l'étage de pressage (8).

7. Appareil pour traiter une matière de départ, **caractérisé en ce que** l'appareil comprend
- au moins un étage de mélange (4) comprenant au moins un dispositif de mélange sélectionné de telle sorte qu'une matière de départ (1) soit mélangée et agglomérée dans le dispositif de mélange pour former une matière de mélange (5) homogène et agglomérée à partir de la matière de départ (1), qui contient au moins une matière organique et qui a été écrasée et/ou broyée (2), de telle sorte que la température de la matière augmente sous l'effet d'un frottement durant l'agglomération,
- au moins un étage de pressage (8), qui comprend au moins un dispositif de presse comprenant un outil de mise en forme pour mettre en forme le produit, pour presser mécaniquement la matière de mélange (5), où la matière de mélange est acheminée sous la forme d'agglomérats granulaires et où la température de la matière de mélange augmente en raison du pressage et où un produit prédéterminé (9) est formé au moyen de l'outil de mise en forme.

8. Appareil selon la revendication 7, **caractérisé en ce que** l'appareil comprend au moins un étage d'écrasement et/ou de broyage (2).

9. Appareil selon la revendication 7 ou 8, **caractérisé en ce que** l'appareil comprend au moins un étage d'extrusion (6) avant l'étage de pressage (8).

10. Appareil selon l'une quelconque des revendications 7 à 9, **caractérisé en ce que** le dispositif de presse comprend une partie de mise en forme et un piston pour presser la matière contre la partie de mise en forme, et une partie générant une puissance et un mouvement pour faire bouger le piston.

11. Appareil selon l'une quelconque des revendications 7 à 10, **caractérisé en ce que** l'appareil comprend un système d'ajustement de pression pour surveiller et ajuster la pression de l'étage de pressage (8).

12. Utilisation du procédé selon l'une quelconque des revendications 1 à 6, **caractérisée en ce que** le procédé est utilisé dans des applications sélectionnées dans un groupe comprenant le traitement d'une matière de départ en produits réutilisés ou produits recyclés, la fabrication de produits composites, la fabrication de produits de combinaison, la fabrication de produits stratifiés, la fabrication d'un constituant de matière première d'asphalte, le traitement de flux secondaires industriels, la fabrication de produits à partir de déchets et/ou la réduction de la quantité de déchets et leurs combinaisons.
